# EUROPÄISCHE PATENTSCHRIFT

(11) **EP 4 353 444 B1**
(45) Veröffentlichungstag und Bekanntmachung des Hinweises auf die Patenterteilung: **20.08.2025**
(21) Anmeldenummer: 22200790.8
(22) Anmeldetag: 11.10.2022
(51) Int. Cl.: B29C 51/24

(54) **TIEFZIEHVORRICHTUNG UND VERPACKUNGSMASCHINE MIT EINER TIEFZIEHVORRICHTUNG**
DEEP DRAWING DEVICE AND PACKAGING MACHINE WITH A DEEP DRAWING DEVICE
DISPOSITIF D'EMBOUTISSAGE PROFOND ET MACHINE D'EMBALLAGE DOTÉE D'UN DISPOSITIF D'EMBOUTISSAGE PROFOND

(43) Veröffentlichungstag der Anmeldung: 17.04.2024
(73) Patentinhaber: Harro Höfliger Verpackungsmaschinen GmbH, 71573 Allmersbach im Tal (DE)
(72) Erfinder: Thaler, Andreas, 71573 Allmersbach im Tal (DE); Birkhold, Daniel, 71573 Allmersbach im Tal (DE)
(74) Vertreter: Zurhorst, Stefan

(56) Entgegenhaltungen:
- DE-A1- 2 046 328
- US-A- 3 837 782

## Beschreibung

Die Erfindung betrifft eine Tiefziehvorrichtung mit den Merkmalen nach dem Oberbegriff des Anspruchs 1 und eine Verpackungsmaschine zur Herstellung von gefüllten Beuteln mit einer solchen Tiefziehvorrichtung.

Aus der DE 2 046 328 A ist eine kontinuierlich arbeitende Formmaschine zur Herstellung von Gegenständen aus plastisch verformbaren Materialplatten bekannt. Zwei endlose Bänder tragen jeweils Matrizen bzw. dazu passende Patrizen. Sie werden derart umlaufend bewegt, dass Matrizen und Patrizen über einen beschränkten Weg paarweise parallel laufen und dabei ineinandergreifen. Durch das Ineinandergreifen wird eine zwischenliegende thermoplastische Materialplatte gemäß der Kontur des Matrizen-Patrizen-Paares umgeformt.

In verbreiteter Ausführung werden Verpackungseinheiten häufig dadurch hergestellt, dass zunächst Folien tiefgezogen werden. In die hierbei entstehenden Folienmulden wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Insbesondere im Haushaltsbereich werden in vorgenannter Weise Einzeldosen von Wasch- oder Spülmittel mittels zweier Bahnen von wasserlöslicher Folie verpackt. Für die industrielle Massenfertigung kommen Verpackungsmaschinen in einem kontinuierlichen, nicht getakteten Betrieb zum Einsatz. Hierbei läuft ein Transporteur beispielsweise in Form einer Kette kontinuierlich um ein feststehendes Maschinengestell um, wobei der Transporteur auf der oberen Bearbeitungsseite eine geradlinige, horizontale Wegstrecke zurücklegt. Gemeinsam mit dem Transporteur werden Plattenelemente mit sogenannten Format- bzw. Matrizenplatten kontinuierlich umlaufend mitbewegt. Synchron zur Bewegung der Formatplatten wird eine erste Folienbahn kontinuierlich zugeführt und auf die Oberseite der Formatplatten aufgelegt. In den Formatplatten sind mehrere Formkavitäten ausgeformt, die für den Tiefziehvorgang und auch für den Vorgang des Befüllens eine zentrale Rolle spielen.

In einer vorbekannten Bauform kommt eine Tiefziehvorrichtung mit einer Formstation zum Einsatz, welche sich nur über eine Teilstrecke synchron mit der jeweiligen Formatplatte von einer Startposition zu einer Endposition mitbewegt und dann zyklisch wieder zurück zur Startposition gefahren wird. Gleichzeitig wird der Transport der Formatplatten und der Folienbahn weiter kontinuierlich aufrechterhalten. Während des Mitlaufens von der Startposition zur Endposition wird die Folienbahn zunächst auf eine solche Temperatur erwärmt, dass sie sich plastisch verformen lässt. Die solchermaßen verformbare Folie wird nun mittels eines aufgebrachten Formvakuums in die Formmulden tiefgezogen. Nach dem Tiefziehen fährt die Formstation zurück zu ihrer Startposition, um dort den nächsten Abschnitt der Folienbahn aufzuheizen und in die Formmulden einer nachfolgenden Formatplatte tiefzuziehen.

Nach Beendigung des Tiefziehvorgangs muss sichergestellt sein, dass die Folie in den Formmulden verbleibt, um das später einzufüllende Füllgut in ausreichender Menge aufnehmen zu können. Auch beim sich daran anschließenden Siegelvorgang ist es wichtig, dass die untere Folienbahn und die eingefüllten Teilmengen des Produktes an Ort und Stelle verbleiben, um eine saubere und dichte Siegelnaht erzielen zu können. Im Regelfall werden deshalb die Formmulden im Anschluss an den Tiefziehvorgang mit einem Haltevakuum beaufschlagt, welches die Folienbahn in ihrer tiefgezogenen Form hält.

Um dies zu erreichen, sind im Stand der Technik zweigeteilte Vorrichtungen zur Bereitstellung eines Vakuums bekannt. Ein erster Teil, nämlich eine örtlich feststehende Formvakuumeinrichtung befindet sich dort, wo der Tiefziehvorgang stattfindet. In Bewegungsrichtung nachfolgend befindet sich ebenfalls ortsfest der zweite Teil in Form einer Haltevakuumeinrichtung. In ihrer kontinuierlichen Bewegung gleiten die Formatplatten über beide Teile hinweg und werden über entsprechende Kanalverbindungen sequenziell zunächst mit der Formvakuumeinrichtung und dann mit der Haltevakuumeinrichtung in Verbindung gebracht. Hierüber ist es möglich, die Formmulden zunächst mit einem Formvakuum und anschließend unabhängig davon mit einem geringeren, wenngleich immer noch ausreichend hohen Haltevakuum zu beaufschlagen.

Im praktischen Betrieb sind einige Schwierigkeiten zu überwinden. Infolge der gleitenden Relativbewegung der Formatplatten relativ zum feststehenden Vakuumkanal müssen entsprechende Dichtmittel zur Verfügung gestellt werden. Trotz des hohen technischen Aufwands können an den Dichtstellen beachtliche Strömungsverluste nicht vermieden werden. Die Einstellung und Beibehaltung eines gewünschten Unterdruckniveaus ist schwierig. Auch die Übergabe von der Formvakuumeinrichtung zur Haltevakuumeinrichtung mit einem kontinuierlichen Unterdruckverlauf gestaltet sich als schwierig.

Durch die Relativbewegung der Formatplattenelemente gegenüber dem feststehenden Vakuumkanal werden hohe Reibkräfte erzeugt. Diese haben nachteilige Einflüsse auf den Antrieb und die erforderliche Antriebsleistung, auf die Positioniergenauigkeit gegenüber den einzelnen Bearbeitungsstationen beispielsweise in Folge einer Dehnung der Transportkette. Auch die Lebensdauer der Transportkette wird durch die hohen Lasten infolge der zu überwindenden Reibkräfte gemindert.

All dem steht gegenüber, dass auf Seiten der Anwender der Wunsch nach immer höher werdenden Vakuumwerten aufkommt.

Der Erfindung liegt die Aufgabe zugrunde, eine gattungsgemäße Tiefziehvorrichtung derart weiterzubilden, dass eine verbesserte Vakuumführung erreicht ist. Diese Aufgabe wird durch eine Tiefziehvorrichtung mit den Merkmalen des Anspruchs 1 gelöst.

Der Erfindung liegt des Weiteren die Aufgabe zugrunde, eine Verpackungsmaschine zur Herstellung von gefüllten Beuteln hinsichtlich ihrer Wirtschaftlichkeit zu verbessern. Diese Aufgabe wird durch eine Verpackungsmaschine mit den Merkmalen des Anspruchs 8 gelöst.

Nach der Erfindung ist vorgesehen, dass die Plattenelemente über Verbindungsleitungen dauerhaft miteinander verbunden sind, dass ein Plattenelement als Anschlusselement mit mindestens einem Vakuumanschluss ausgeführt ist, und dass der Vakuumanschluss mit einer Vakuumquelle verbunden ist. Die Plattenelemente sind im Betrieb über die Verbindungsleitungen und den Vakuumanschluss permanent mit dem Vakuum beaufschlagt. Jedes Plattenelement verfügt über ein Schaltventil zur bedarfsabhängigen Aufschaltung des im Plattenelement permanent anliegenden Vakuums auf die zugehörigen Formkavitäten.

Durch die erfindungsgemäße Ausgestaltung ist ein umlaufendes, geschlossenes Vakuum-Versorgungssystem für das Haltevakuum und/oder für das Formvakuum geschaffen. Durch die geschlossene Bauform ist es einerseits quasi frei von Leckagen. Andererseits müssen bei den Bewegungsvorgängen praktisch keine durch das Vakuumsystem erzeugten Reibungen überwunden werden. Durch das Fehlen von Andrucckräften für die Dichtigkeitserzeugung sind die mechanischen Belastungen insbesondere des Antriebsstranges gering. Verformungen unter Betriebslast sind auf ein Minimum reduziert. Die erforderliche Antriebsleistung ist gering. Das in sich geschlossene Vakuumsystem erlaubt die Bereitstellung von erhöhten Unterdruckwerten, so dass auch schwierige Prozessführungen realisiert werden können.

Für die Anbindung des umlaufenden, als Anschlusselement ausgeführten Plattenelementes an die Vakuumquelle kommen verschiedene Möglichkeiten in Betracht. Bevorzugt ist eine Vakuumeinrichtung vorgesehen, welche die Vakuumquelle, einen längs des Maschinengestells geführten Mitnehmer mit mindestens einer Drehdurchführung und eine flexible Vakuumumleitung zwischen der Vakuumquelle und dem Mitnehmer umfasst. Der Vakuumanschluss des als Anschlusselement ausgeführten Plattenelementes ist über eine Anschlussleitung mit der Drehdurchführung der Vakuumeinrichtung vakuumübertragend verbunden.

Für die Bewegung der Einzelkomponenten innerhalb der Vakuumeinrichtung ist kein eigener Antrieb erforderlich. Vielmehr zieht das umlaufende Plattenelement den Mitnehmer entlang seiner Führung in eine Hin- und Herbewegung mit. Die Drehdurchführung erlaubt einerseits das Nachfolgen des entsprechenden Plattenelementes auf seinen linearen Bewegungsbahnen in Prozessrichtung und in rückführender Gegenrichtung. Andererseits erlaubt die Drehdurchführung eine zyklische Drehbewegung des Plattenelements beim zyklischen Umlaufen um das Maschinengestell. Damit ist nur im Bereich der Drehdurchführung die Abdichtung von bewegten, vakuumführenden Teilen erforderlich. Da hier nur eine reine Drehbewegung auftritt, ist eine solche Abdichtung ohne größere Schwierigkeiten realisierbar. Die Leichtgängigkeit der Anordnung ist durch eine solche Abdichtung praktisch nicht beeinträchtigt.

In einer bevorzugten Ausführungsform sind die Formkavitäten sequentiell mit einem Formvakuum und mit einem Haltevakuum beaufschlagbar, wobei der Vakuumanschluss ein Haltevakuumanschluss ist, wobei die Vakuumquelle eine Haltevakuumquelle ist, und wobei die Plattenelemente im Betrieb permanent mit dem Haltevakuum beaufschlagt sind. In der erfindungsgemäßen Ausgestaltung ist das als Haltevakuum vorgesehene Vakuum entlang der gesamten nutzbaren Bewegungsstrecke der Plattenelemente bereitgestellt. Ohne Zusatzaufwand kann das Haltevakuum an jeder gewünschten Stelle bzw. an jeder Bearbeitungsstation genutzt werden.

Das in jedem Plattenelement vorhandene Schaltventil erlaubt die Aufschaltung des permanent verfügbaren Vakuums zu jedem gewünschten Zeitpunkt. Ein individuelles Einschalten oder Umschalten einzelner Matrizenplatten von einem Formvakuum auf ein Haltevakuum und umgekehrt ist ohne weiteres möglich.

Es kann zweckmäßig sein, für das Formvakuum und für das Haltevakuum unterschiedliche und getrennt voneinander betätigbare Schaltventile vorzusehen. In bevorzugter Weiterbildung ist das im jeweiligen Plattenelement vorhandene Schaltventil als Umschaltventil zur wechselseitigen Beaufschlagung der Formkavitäten mit dem Formvakuum und mit dem Haltevakuum ausgeführt. Hierdurch kann bei einfachem Aufbau und hoher Funktionssicherheit insbesondere der Wechsel vom initialen Formvakuum zum nachfolgenden Haltevakuum sichergestellt werden.

Es kann zweckmäßig sein, mit der vorgenannten Anordnung auch die Einspeisung des Formvakuums vorzunehmen. Anders als beim Haltevakuum muss das Formvakuum jedoch nicht über eine längere Strecke entlang mehrerer Bearbeitungsstationen zur Verfügung stehen. Vielmehr reicht dessen Verfügbarkeit allein im Arbeitsbereich der Tiefziehvorrichtung aus. Bevorzugt weist deshalb die Tiefziehanordnung eine eigene Formvakuumeinrichtung auf, welche eine Formvakuumquelle und eine mit der Formvakuumquelle verbundene Verbindungsvorrichtung umfasst, wobei die Verbindungsvorrichtung Teil der zyklisch bewegten Tiefziehvorrichtung ist. Die Plattenelemente weisen jeweils einen Formvakuumanschluss auf. Korrespondierend dazu weist die Verbindungsvorrichtung mindestens einen Vakuumverbinder auf, welcher zum zyklischen Verbinden mit dem Formvakuumanschluss ausgelegt ist.

Hiermit ist eine Anordnung geschaffen, bei der die Verbindungsvorrichtung zyklisch mit den übrigen Teilen der Tiefziehvorrichtung zwischen einer Startposition und einer Endposition hin und her verfährt. Bei der Bewegung in Arbeitsrichtung ist die Verbindungsvorrichtung über ihren Vakuumverbinder mit dem zugehörigen Formvakuumanschluss des jeweiligen Plattenelementes verbunden, wobei sie eine verlust- und reibungsfreie Bereitstellung des Formvakuums sicherstellt. Bei der zyklischen Rückbewegung ist die Verbindungsvorrichtung vom Formvakuumanschluss getrennt, so dass die Weiterbewegung der Plattenelemente unbehindert ist. Insbesondere weist dabei die Verbindungsvorrichtung mehrere und vorteilhaft vier Vakuumverbinder zum zyklischen Verbinden mit einer entsprechenden Anzahl von Plattenelementen auf, so dass diese gleichzeitig in einem einzelnen Arbeitstakt mit dem Formvakuum zum gleichzeitigen Tiefziehen beaufschlagt werden können.

In vorteilhafter Weiterbildung ist die Verbindungsvorrichtung mit ihrem mindestens einen Vakuumverbinder für die Ausführung einer die Vakuumverbindung lösenden Lösebewegung sowie einer die Vakuumverbindung herstellenden Schließbewegung jeweils mit einer senkrecht zur Bewegungsrichtung der Plattenelemente liegenden Richtungskomponente ausgelegt. Durch die entsprechende Lösebewegung wird die Verbindungsvorrichtung auf Abstand zu den bewegten Plattenelementen gebracht, so dass kein mechanischer Kontakt mehr besteht. Die Bewegung der Plattenelemente ist im gelösten Zustand ungehindert. Insbesondere kann sich keine Reibung zwischen der Verbindungsvorrichtung und den bewegten Plattenelementen ausbilden. Durch die verbindende Schließbewegung wird der genannte Abstand wieder aufgehoben. Die Verbindungsvorrichtung dockt vakuumübertragend an ein oder mehrere Plattenelemente an und wird dann synchron mitbewegt. Auch hierbei treten keine Reibkräfte im Zusammenhang mit der Vakuumübertragung auf, so dass insgesamt eine freie Beweglichkeit der Plattenelemente bei gleichzeitig hoher Dichtigkeit der Vakuumführung sichergestellt ist.

In einer bevorzugten Ausführungsform weisen die Plattenelemente jeweils eine mit dem umlaufenden Transporteur verbundene Trägerplatte und eine lösbar mit der Trägerplatte verbundene Matrizenplatte auf. Die Formkavitäten sind dabei in der Matrizenplatte ausgebildet, während die Trägerplatten über die Verbindungsleitungen miteinander verbunden sind und außerdem jeweils das vorgenannte mindestens eine Schaltventil aufnehmen. Durch Austausch der Matrizenplatte kann mit geringem Aufwand eine Veränderung der Formkavitäten und damit eine Veränderung der Produktgeometrie vorgenommen werden, während die erfindungsgemäße Vakuumführung und -steuerung hiervon unberührt bleibt. Der Aufwand einer Maschinenumrüstung ist dabei auf ein Minimum reduziert.

Ein Ausführungsbeispiel der Erfindung wird nachfolgend anhand der Zeichnung näher beschrieben. Es zeigen:
- Fig. 1: in einer seitlichen Ausschnittsdarstellung eine erfindungsgemäß ausgeführte Verpackungsmaschine mit einem kontinuierlich umlaufend bewegten Transporteur sowie mit zyklisch mitbewegten Form-, Füll- und Siegelstationen,
- Fig. 2: in einer vergrößerten Schnittdarstellung einen Teil der Formstation nach Fig. 1 mit einer an mehreren Plattenelementen angeschlossenen Verbindungsvorrichtung zur Aufbringung eines Tiefziehvakuums,
- Fig. 3: in einer perspektivischen Prinzipdarstellung den Transporteur nach Fig. 1 mit untereinander vakuumübertragend verbundenen Plattenelementen und mit einer mitlaufend an ein Anschlusselement angeschlossenen Drehdurchführung einer Haltevakuumeinrichtung,
- Fig. 4: in einer teilweise geschnittenen Perspektivdarstellung eines der Plattenelemente mit Matrizenplatte, mit Trägerplatte und mit in die Trägerplatte integriertem Umschaltventil.

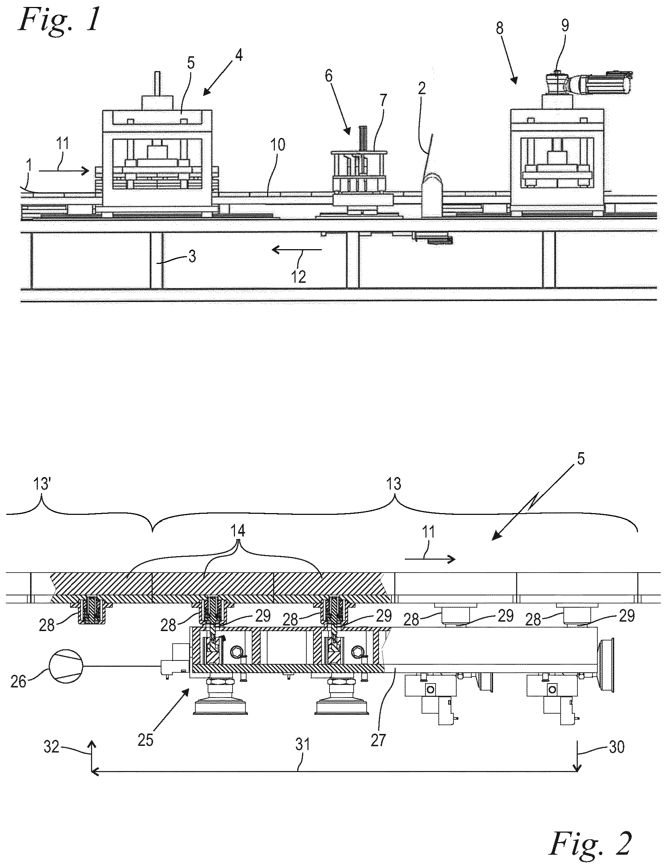

Fig. 1 zeigt in einer Seitenansicht einen Ausschnitt aus einer erfindungsgemäßen Verpackungsmaschine zur Herstellung von gefüllten Beuteln. Hierzu umfasst die Verpackungsmaschine ein Maschinengestell 3, eine Formstation 4 mit einer Tiefziehvorrichtung 5, eine Füllstation 6 mit einer Füllvorrichtung 7 und eine Siegelstation 8 mit einer Siegelvorrichtung 9. Eine Folienbahn 1 wird der Verpackungsmaschine zugeführt und in der Formstation 4 mittels der Tiefziehvorrichtung 5 tiefgezogen, so dass sich in der Folienbahn 1 Mulden ausbilden. Diese Mulden werden in der Füllstation 6 mit einem Produkt befüllt. Hieran anschließend wird eine Deckfolie 2 zugeführt und in der Siegelstation 8 auf die Folienbahn 1 aufgesiegelt, wobei die befüllten Mulden verschlossen werden. In einer nicht dargestellten Schneidestation wird die solchermaßen gebildete Folieneinheit zu Folienbeuteln vereinzelt. Im Ausführungsbeispiel handelt es sich bei der Folienbahn 1 und bei der Deckfolie 2 um wasserlösliche Folien, namentlich um PVOH-Folien, zwischen denen ein Wasch- oder Reinigungsmittel verpackt wird. Solchermaßen hergestellte gefüllte Folienbeutel werden beispielsweise in eine Spülmaschine eingelegt. Dort löst sich das Folienmaterial bei Wasserkontakt auf und gibt das enthaltene Spülmittel frei. Sinngemäß das Gleiche gilt für den Einsatz eines solchen Folienbeutels in einer Waschmaschine.

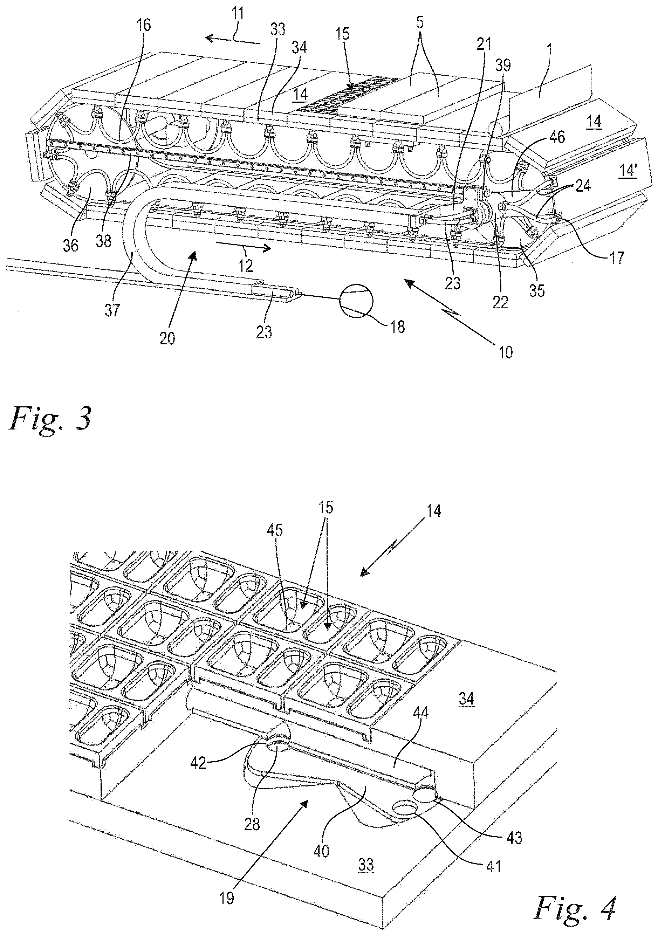

Die Verpackungsmaschine umfasst ein ortsfest montiertes Maschinengestell 3 sowie einen kontinuierlich angetriebenen Transporteur 10. Der Transporteur 10 kann ein Förderband oder dergleichen sein und ist im gezeigten Ausführungsbeispiel durch Plattenelemente 14 gebildet, die durch Gelenkketten miteinander verbunden sind. Auf den Plattenelementen 14 sind weiter unten näher beschriebene Formkavitäten 15 (Fig. 3, 4) zum Tiefziehen der Folienbahn 1 und zum Halten der durch das Tiefziehen geformten Mulden in der Folienbahn 1 ausgebildet. Die Plattenelemente 14 werden zusammen mit dem Transporteur 10 kontinuierlich und um das Maschinengestell 3 umlaufend angetrieben, wobei sie sich für den eigentlichen Herstellvorgang der Beutel auf einer oberen horizontalen Bahn in einer durch einen Pfeil angegebenen Bewegungsrichtung 11 bewegen. Nach dem eigentlichen Herstellvorgang und nach entsprechender Umlenkung werden sie anschließend im unteren Bereich des Maschinengestells 2 in Gegenrichtung entsprechend einem Pfeil 12 zurückgeführt. Ebenso kontinuierlich wird die endlose Folienbahn 1 zugeführt und von oben auf die Plattenelemente 14 mit den Formkavitäten 15 aufgelegt. Zwischen der Füllstation 6 und der Siegelstation 8 wird später noch die Deckfolie 2 kontinuierlich zugeführt und von oben auf die Oberseite der Folienbahn 1 aufgelegt. Die Folienbahn 1 und die Deckfolie 2 werden im aufgelegten Zustand in der Bewegungsrichtung 11 synchron und kontinuierlich mit dem Transporteur 10 mitbewegt.

Die Station zur Zufuhr der Folienbahn 1 sowie die Station zur Zufuhr der Deckfolie 2 sind ortsfest am Maschinengestell 3 montiert, ebenso wie nicht dargestellte Stationen für Wasserauftrag zur Unterstützung des Siegelvorgangs sowie für das Perforieren bzw. seitliche Beschneiden der Folien. Die hier durchgeführten Prozesse arbeiten ebenso wie die Bewegung des Transporteuers 10 kontinuierlich. Anders sieht dies bei der Formstation 4, der Füllstation 6 und der Siegelstation 8 aus. Deren Tiefziehvorrichtung 5, Füllvorrichtung 7 respektive Siegelvorrichtung 9 sind nicht ortsfest relativ zum Maschinengestell 3 positioniert, sondern werden abschnittsweise über eine bestimmte Wegstrecke synchron mit dem Transporteur 10 in der Bewegungsrichtung 11 mitgefahren. Währenddessen erfolgt in der Formstation 4 mittels der mitbewegten Tiefziehvorrichtung 5 das Tiefziehen der Folienbahn 1, in der Füllstation 6 mittels der mitbewegten Füllvorrichtung 7 das Einfüllen des zu verpackenden Produkts in die tiefgezogenen Mulden, und in der Siegelstation 8 mittels der mitbewegten Siegelvorrichtung 9 das Aufsiegeln der Deckfolie 2 auf die untere Folienbahn 1. Nach Beendigung des jeweiligen Vorganges werden die Tiefziehvorrichtung 5, die Füllvorrichtung 7 und die Siegelvorrichtung 9 zyklisch wieder zurück auf ihre Ausgangsposition verfahren, wo dann ein neuer Zyklus des jeweils ausgeführten Prozesses beginnt. Zumindest die Formstation 4 kann aber auch ortsfest beispielsweise mit einer Heizwalze für die Erwärmung der Folienbahn auf Tiefziehtemperatur sein.

Fig. 2 zeigt in einer vergrößerten Längsschnittdarstellung einen Ausschnitt aus der Tiefziehvorrichtung 5 nach Fig. 1. Die Tiefziehvorrichtung 5 kann dazu ausgelegt sein, nur ein einzelnes Plattenelement 14 aufzunehmen und dort die Folienbahn 1 in einem Zyklus tiefzuziehen. Im gezeigten Ausführungsbeispiel ist die Tiefziehvorrichtung 5 zur gleichzeitigen Aufnahme von mehreren, hier vier aufeinanderfolgenden Plattenelementen 14 ausgelegt. Die genannten vier aufeinanderfolgenden Plattenelemente 14 bilden zusammen einen Plattensatz 13, wobei die Tiefziehvorrichtung 5 zyklisch immer einen vollständigen Plattensatz 13 aufnimmt. Dies muss nicht zwingend auch für die nachfolgenden Füll- und Siegelstationen 6, 8 (Fig. 1) gelten. Im gezeigten Ausführungsbeispiel nach Fig. 1 sind jedoch auch die Füllstation 6 und die Siegelstation 8 zur Aufnahme und zyklischen Prozessierung eines kompletten Plattensatzes 13 ausgelegt.

Die im Zusammenhang mit Fig. 1 schon beschriebene und hier nur ausschnittsweise dargestellte Tiefziehanordnung weist eine Formvakuumeinrichtung 25 auf. Diese umfasst eine Formvakuumquelle 26 und eine Verbindungsvorrichtung 27. Die Verbindungsvorrichtung 27 ist dauerhaft mit der Formvakuumquelle 26 verbunden, so dass während des Betriebes in der Verbindungsvorrichtung 27 permanent ein schaltbares Formvakuum zur Verfügung steht. An der Oberseite ist die Verbindungsvorrichtung 27 mit mindestens einem Vakuumverbinder 29 versehen. Im gezeigten bevorzugten Ausführungsbeispiel sind mehrere, hier insgesamt vier solcher Vakuumverbinder 29 an der Oberseite der Verbindungsvorrichtung 27 positioniert.

Auf ihrer jeweiligen Unterseite weisen die Plattenelemente 14 jeweils einen Formvakuumanschluss 28 auf. Die Formvakuumanschlüsse 28 und die Vakuumverbinder 29 sind zu einem zyklischen Herstellen und zu einem zyklischen Lösen der Vakuumverbindung ausgelegt. In der Darstellung nach Fig. 2 ist die Verbindungsvorrichtung 27 mit ihren Vakuumverbindern 29 vakuumübertragend mit den Formvakuumanschlüssen 28 eines gesamten Plattensatzes 13, also mit den Formvakuumanschlüssen 28 von insgesamt vier Plattenelementen 14 verbunden. In diesem angeschlossenen Zustand ist die Verbindungsvorrichtung 27 mit ihren Vakuumverbindern 29 dichtend von unten gegen die Formvakuumanschlüsse 28 der Plattenelemente 14 gedrückt. Es kann aber auch eine mechanische Kupplung beispielsweise mit Formschluss bzw. mit Verrastung zweckmäßig sein. Jedenfalls herrscht im angeschlossenen Zustand eine druckdichte, vakuumübertragende Verbindung zwischen der Verbindungsvorrichtung 27 und den angeschlossenen Plattenelementen 14.

Die Verbindungsvorrichtung 27 ist Teil der im Zusammenhang mit Fig. 1 näher beschriebenen Tiefziehvorrichtung 5, und wird gemeinsam mit dieser zyklisch zwischen den weiter ober schon erwähnten Start- und Endpositionen hin und her bewegt. Im verbundenen Zustand nach Fig. 2 läuft die Verbindungsvorrichtung 27 in der Bewegungsrichtung 11 synchron mit den Plattenelementen 14 von der Startposition bis zur Endposition mit. Währenddessen werden die in Fig. 4 gezeigten Formkavitäten 15 über ebenfalls dort gezeigten Schaltventile 19 mit dem anliegenden Formvakuum beaufschlagt, so dass die erwärmte, plastisch verformbare Folienbahn 1 mittels des Formvakuums in die Formkavitäten 15 tiefgezogen wird.

Nach Beendigung des Tiefziehvorgangs und bei Erreichen der Endposition wird die Verbindungsvorrichtung 27 mit ihren Vakuumverbindern 29 von den Formvakuumanschlüssen 28 der angeschlossenen Plattenelemente 14 getrennt und davon abgezogen. Die Formvakuumanschlüsse 28 an den im Einsatz befindlichen Plattenelementen 14 und auch die zugehörigen Vakuumverbinder 29 werden vor dem Trennen durch darin befindliche, nicht näher dargestellte Ventile einzeln automatisch bzw. selbsttätig verschlossen. Das genannte Abziehen erfolgt vertikal nach unten. Es wird also eine die Vakuumverbindung trennende Lösebewegung 30 mit einer senkrecht zur Bewegungsrichtung liegenden Richtungskomponente ausgeführt, so dass die Anschlussvorrichtung 27 auf einem vertikalen Abstand zu den Plattenelementen 14 gebracht wird. Die solchermaßen gelöste und abgesenkte Anschlussvorrichtung 27 fährt nun gemeinsam mit der übrigen Tiefziehvorrichtung 5 in einer Rückbewegung 31 so weit zurück, dass es in einer anschließenden, anhebenden Schließbewegung 32 mit einer ebenfalls senkrecht zur Bewegungsrichtung 11 liegenden Richtungskomponente an den nachfolgenden Plattensatz 13' angeschlossen wird und mit diesem in der Bewegungsrichtung 11 erneut mitfährt. Beim Anschließen bzw. Verbinden werden die schon genannten Ventile in den Formvakuumanschlüssen 28 und in den Vakuumverbindern 29 wieder selbsttätig geöffnet, womit eine vakuumübertragende Verbindung wiederhergestellt ist.

Fig. 3 zeigt in einer perspektivischen Prinzipdarstellung den Transporteur 10 nach Fig. 1 mit Einzelheiten zur Führung des Haltevakuums. Der Transporteur 10 ist hier zur Vereinfachung kürzer als in der tatsächlichen Verpackungsmaschine nach Fig. 1 und nur im Bereich der Tiefziehvorrichtung 5 dargestellt, um die technischen Einzelheiten besser hervorheben zu können.

Es ist hier erkennbar, dass auf den Oberseiten der Plattenelemente 14 eine Matrix von Formkavitäten 15 eingearbeitet ist, wobei der besseren Übersicht halber hier nur ein Plattenelement 14 mit solchen Formkavitäten 15 dargestellt ist. Wie schon im Zusammenhang mit Fig. 1 erläutert wird die Folienbahn 1 im Betrieb auf die Oberseite der in der Bewegungsrichtung 11 bewegten Plattenelement 14 aufgelegt und in der hier nur angedeuteten Tiefziehvorrichtung 5 in die Formkavitäten 15 mittels der weiter oben im Zusammenhang mit Fig. 2 beschriebenen Formvakuumeinrichtung 25 tiefgezogen. Nach Abschluss des Tiefziehvorgangs laufen die Plattenelemente 14 in der Bewegungsrichtung 11 weiter durch die nachfolgenden, hier nicht dargestellten Bearbeitungsstationen, namentlich durch die Füllstation 6 und die Siegelstation 8 (Fig. 1). Das Formvakuum wirkt hierbei nicht mehr auf die Folienbahn 1 ein, wird aber durch ein nachfolgend näher beschriebenes Haltevakuum ersetzt. Das Haltevakuum hält die tiefgezogene Folienbahn 1 in den Formkavitäten 15 zumindest beim Durchlauf durch die Füllstation 6 und die Siegelstation 8 (Fig. 1).

Für die Beaufschlagung der Formkavitäten 15 mit dem genannten Haltevakuum ist ein hier mit 14' gekennzeichnetes Plattenelement als Anschlusselement ausgeführt und mit mindestens einem, hier mit zwei Vakuumanschlüssen 17 versehen. Über diese Vakuumanschlüsse 17 ist das Plattenelement 14' vakuumübertragend mit einer Vakuumquelle 18 entsprechend der nachfolgenden näheren Beschreibung verbunden. Darüber hinaus entspricht das als Anschlusselement ausgeführte Plattenelement 14' in seinen übrigen Merkmalen und Bezugszeichen den anderen Plattenelementen 14. Sämtliche Plattenelemente 14, 14' sind mittels Verbindungsleitungen 16 dauerhaft vakuumübertragend verbunden. Die Verbindungsleitungen 16 sind hier durch flexible Schläuche gebildet. Es kann sich aber auch um feste Gelenkkanäle oder dergleichen handeln. Jedenfalls ist im Betrieb über die Verbindungsleitungen 16 in sämtlichen Plattenelementen 14, 14' an jeder Position ihres Umlaufs dasjenige Vakuumniveau verfügbar ist, das von der Vakuumquelle 18 über die Anschlussleitung 24 eingespeist wird. Im praktischen Betrieb wird ein Haltevakuum eingespeist, welches geringer sein kann als das vorstehend schon erwähnte Formvakuum, welches aber bevorzugt ein gleiches, zumindest jedoch ein ähnliches Vakuumniveau hat wie das Formvakuum.

Für die konkrete Ausgestaltung der Haltevakuumversorgung weist die hier in Fig. 3 gezeigte Tiefziehanordnung eine Vakuumeinrichtung 20 auf, welche neben der schon erwähnten Vakuumquelle 18 noch einen längs des Maschinengestells 3 (Fig. 1) geführten Mitnehmer 21 mit einer Drehdurchführung 22 sowie eine flexible Vakuumleitung 23 zwischen der Vakuumquelle 18 und dem Mitnehmer 21 umfasst. Der Mitnehmer 21 ist hier seitlich neben der umlaufenden Kette aus Plattenelementen 14 positioniert, kann aber innerhalb der Umlaufbahn der Plattenelemente 14 bzw. zwischen den weiter unten noch erwähnten Paaren von Umlenkrädern 35, 36 verlaufend angeordnet sein. Das Gleiche gilt auch für die Verbindungsleitungen 16. Die Vakuumquelle 18 ist ortsfest montiert. Die an ihre angeschlossene flexible Vakuumleitung 23 ist in einer Schleppkette 38 gehalten, so dass ihr gegenüberliegendes, an den Mitnehmer 21 angeschlossenes Ende der Bewegung des Mitnehmers 21 folgen kann. Für die Längsbewegung des Mitnehmers 21 ist seitlich neben dem Transporteur 10 parallel zur Bewegungsrichtung 11 eine Führungsschiene 38 montiert, auf der ein Schlitten in Form eines Kugelumlaufschlittens läuft. Auf dem Kugelumlaufschlitten 39 ist der Mitnehmer 21 mit der daran befestigten Drehdurchführung 22 montiert. Ein drehbarer Ausgangsteil der Drehdurchführung 22 ist über ein Verbindungsstück 46 fest mit dem als Anschlusselement ausgeführten Plattenelement 14' verbunden.

Der Transporteur 10 weist an seinen beiden Enden Paare von Umlenkrädern 35, 36 auf, an denen die umlaufenden Plattenelemente 14, 14' von der oberen Bewegungsstrecke mit der Bewegungsrichtung 11 in die untere, entgegengesetzt bewegte Rücklaufstrecke entsprechend dem Pfeil 12 und wieder zurück umgelenkt werden. Die Drehdurchführung 22 weist eine Drehachse auf, die parallel zu den Drehachsen der Umlenkräder 35, 36 liegt. Die Führungsschiene 38 ist derart bemessen, dass der Mitnehmer 21 von einem Umlenkrad 35 zum anderen Umlenkrad 36 und wieder zurück hin und her verfahren kann. Außerdem ist die Führungsschiene 38 derart positioniert, dass die am Mitnehmer 21 befestigte Drehdurchführung 22 an ihren Endpunkten der linearen Bewegung koaxial zu dem einen Umlenkrad 35 respektive zu dem anderen Umlenkrad 36 zu liegen kommt.

Das als Anschlusselement ausgeführte Plattenelement 14' ist an seinen Vakuumanschlüssen 17 über mindestens eine, hier über zwei Anschlussleitungen 24 mit der Drehdurchführung 22 der Vakuumeinrichtung 20 vakuumübertragend verbunden. Das von der Vakuumquelle 18 bereitgestellte Vakuum wird also durch die Vakuumleitung 23, dem Mitnehmer 21, die Drehdurchführung 22 und die Anschlussleitungen 24 in das Plattenelement 14' eingespeist. Von dort wird es über die Verbindungsleitungen 16 auf sämtliche Plattenelemente 14 verteilt, wo es unabhängig von deren aktuellen Umlaufpositionen permanent zur Verfügung steht.

In der Darstellung nach Fig. 3 befindet sich das als Anschlusselement ausgeführte Plattenelement 14' in seiner äußerst rechten Position auf dem zugehörigen Umlenkrad 35, so dass sich auch dort der Mitnehmer 21 mit der Drehdurchführung 22 befindet. Während seines 180°-Umlaufs dreht sich das Plattenelement 14' um die Drehachse des Umlenkrades 35 mit dem gleichen Betrag von 180°. Da sich die Drehdurchführung 22 achsgleich hierzu befindet, ist keine ausgleichende Linearbewegung erforderlich. Die Drehdurchführung 22 hat hier lediglich die Aufgabe, die relative Drehbewegung der Anschlussleitungen 24 relativ zum nicht drehbar gehaltenen Mitnehmer 21 zuzulassen. Die Drehung des drehbaren Ausgangsteils der Drehdurchführung 22 wird durch das Verbindungsstück 46 herbeigeführt. Gegebenenfalls kann hierfür aber auch die Anbindung mittels der Anschlussleitungen 24 ausreichen, sofern diese ausreichend steif sind.

Im Anschluss an die genannte Drehbewegung führt das Plattenelement 14' eine lineare Arbeitsbewegung entsprechend dem Pfeil 11 aus, wobei es über das Verbindungsstück 46 den Mitnehmer 21 entlang der Führungsschiene 38 bis zum Erreichen des gegenüberliegenden Umlenkrades 36 mitnimmt. Dort findet erneut eine 180°-Drehbewegung in analoger Weise statt. Hieran schließt sich wieder eine lineare Bewegung in der Rückführungsrichtung 12 an, wobei dann das Plattenelement 14' den Mitnehmer 21 über das Verbindungsstück 46 wieder zurück zum anderen Umlenkrad 36 mitnimmt, bis ein vollständiger Umlauf erzielt ist. Ein solcher Umlauf kann beliebig oft wiederholt werden, wobei sämtliche Plattenelemente 14, 14' in vorstehend beschriebener Weise dauerhaft mit dem Haltevakuum versorgt sind.

Fig. 4 zeigt in einer teilweise geschnittenen Perspektivdarstellung eines der Plattenelemente 14 stellvertretend für alle übrigen Plattenelemente 14, 14', welche in den hier gezeigten Merkmalen identisch ausgeführt sind. Demnach ist das Plattenelement 14 mehrteilig mit einer unteren Trägerplatte 33 und mit einer lösbar mit der Trägerplatte 33 verbundenen Matrizenplatte 34 ausgeführt. In der Matrizenplatte 34 sind die Formkavitäten 15 ausgebildet. Die untere Trägerplatte 33 ist mit dem Transporteur 10 (Fig. 3) verbunden, so dass die Matrizenplatte 34 beispielsweise für einen Formatwechsel mit unterschiedlich geformten Formkavitäten 15 ausgetauscht werden kann, ohne die Trägerplatte 33 vom Transporteur 10 lösen zu müssen.

Die Trägerplatte 33 beinhaltet das oben schon erwähnte mindestens eine Schaltventil 19. Außerdem ergibt sich aus der Zusammenschau mit Fig. 3, dass die Verbindungsleitungen 16, im Falle des Plattenelementes 14' auch die Anschlussleitungen 24 an den Trägerplatten 33 der Plattenelemente 14, 14' angeschlossen sind, so dass also die Plattenelemente 14, 14' über ihre Trägerplatten 33 und die Verbindungsleitungen 16 miteinander verbunden sind.

Das Schaltventil 19 kann ein Ein-/Aus-Schaltventil sein, wobei auch mehrere solcher Ein-/Aus-Schaltventile beispielsweise zur unabhängigen Aufschaltung eines Formvakuums und eines Haltevakuums vorgesehen sein können. Im gezeigten Ausführungsbeispiel ist das Schaltventil hier als Umschaltventil zur wechselseitigen Beaufschlagung der Formkavitäten 15 mit dem Formvakuum und mit dem Haltevakuum ausgeführt. Hierzu umfasst das Schaltventil 19 einen um eine Hochachse schwenkbaren Ventilkörper 40, der in einer entsprechenden Aussparung in der Trägerplatte 33 liegt. Der Ventilkörper 40 ist an einem Ende mit einer Ventilöffnung 41 und am gegenüberliegenden Ende mit einer weiteren Ventilöffnung 42 versehen. In der gezeigten Schaltposition liegt die weitere Ventilöffnung 42 in Überdeckung mit dem Formvakuumanschluss 28, während eine mit dem Haltevakuumanschluss 17 in Verbindung stehende Haltevakuumzufuhr 43 durch den Ventilkörper 40 abgedeckt ist. Demnach wird in der gezeigten Schaltstellung das Formvakuum über den Formvakuumanschluss 28, die Ventilöffnung 42 im Ventilkörper 40 und über einen Vakuumkanal 44 zu den verschiedenen Formkavitäten 15 geleitet, wo es durch Saugöffnungen 45 im Boden der Formkavitäten 15 sich entfalten und auf die Folienbahn 1 (Fig. 3) für den Tiefziehvorgang einwirken kann.

Nach Beendigung des Tiefziehens wird das Schaltventil 19 umgeschaltet, wobei die Ventilöffnung 41 in Überdeckung mit der Haltevakuumzufuhr 43 gebracht wird, während zeitgleich der Formvakuumanschluss 28 durch den Ventilkörper 40 abgedeckt wird. Anstelle des Formvakuums wird also nun das Haltevakuum aus der Haltevakuumzufuhr 43 durch die Ventilöffnung 41 und den Vakuumkanal 44 über die Saugöffnungen 45 in die Formkavitäten 15 eingespeist. Dort hält das Haltevakuum die tiefgezogenen Folienmulden in den Formkavitäten 15.

Das Umschalten zwischen Formvakuum und Haltevakuum kann individuell für jedes einzelne Plattenelement 14, 14' vorgenommen werden. Eine einfache Steuerung des Schaltventils 19 kann beispielsweise durch Schaltnocken an bestimmten gewählten Positionen des Maschinengestells 3 (Fig. 1) auf mechanischem Wege erfolgen. Denkbar sind aber auch andere Betätigungen der Schaltventile 19, beispielsweise auf elektrischem Weg.

Insbesondere dann, wenn das Tiefziehvakuum und das Haltevakuum das gleiche Niveau aufweisen sollen, kann eine Beschränkung der Vakuumanordnung auf die Ausführung nach den Fig. 3 und 4 erfolgen, während auf das Tiefziehvakuumkonzept nach Fig. 2 verzichtet werden kann. Das über die Anordnung nach den Fig. 3 und 4 bereitgestellte Vakuum kann sowohl als Tiefziehvakuum als auch als Haltevakuum genutzt werden.

Im gezeigten Ausführungsbeispiel ist jedoch eine getrennte Versorgung mit Tiefziehvakuum und mit Haltevakuum vorgesehen. Hierbei ist nach den Fig. 3, 4 der Vakuumanschluss 17 ein Haltevakuumanschluss, die Vakuumquelle 18 eine Haltevakuumquelle und Vakuumeinrichtung 20 eine Haltevakuumeinrichtung. Die Plattenelemente 14, 14' sind dabei im Betrieb permanent mit dem Haltevakuum ausgebildeten Vakuum beaufschlagt. Getrennt davon ist die Versorgung mit Tiefziehvakuum nach Fig. 2 vorgesehen. Alternativ dazu kann aber auch eine getrennte Versorgung mit Tiefziehvakuum nach dem gleichen Konzept wie die Versorgung mit Haltevakuum nach den Fig. 3, 4 vorgesehen sein.

## Patentansprüche

1. Tiefziehanordnung zum Tiefziehen einer kontinuierlich zugeführten Folienbahn (1), umfassend einen kontinuierlich um ein feststehendes Maschinengestell (3) umlaufenden Transporteur (10) mit Plattenelementen (14, 14') und mit in den Plattenelementen (14, 14') befindlichen Formkavitäten (15), des Weiteren umfassend eine zyklisch getaktete, von einer Startposition zu einer Endposition mit dem Transporteur (10) mitlaufende und von dort zur Startposition zurücklaufende Tiefziehvorrichtung (5), wobei die Formkavitäten (15) mit einem Vakuum beaufschlagbar sind,
**dadurch gekennzeichnet, dass** die Plattenelemente (14, 14') über Verbindungsleitungen (16) dauerhaft miteinander verbunden sind, dass ein Plattenelement (14') als Anschlusselement mit mindestens einem Vakuumanschluss (17) ausgeführt ist, dass der Vakuumanschluss (17) mit einer Vakuumquelle (18) verbunden ist, dass die Plattenelemente (14, 14') im Betrieb über die Verbindungsleitungen (16) und den Vakuumanschluss (17) permanent mit dem Vakuum beaufschlagt sind, und dass jedes Plattenelement (14, 14') über mindestens ein Schaltventil (19) zur bedarfsabhängigen Aufschaltung des im Plattenelement (14, 14') permanent anliegenden Vakuums auf die zugehörigen Formkavitäten (15) verfügt.

2. Tiefziehanordnung nach Anspruch 1,
**dadurch gekennzeichnet, dass** die Tiefziehanordnung eine Vakuumeinrichtung (20) aufweist, welche die Vakuumquelle (18), einen längs des Maschinengestells (3) geführten Mitnehmer (21) mit mindestens einer Drehdurchführung (22), und eine flexible Vakuumleitung (23) zwischen der Vakuumquelle (18) und dem Mitnehmer (21) umfasst, wobei der Vakuumanschluss (17) des als Anschlusselement ausgeführten Plattenelements (14') über eine Anschlussleitung (24) mit der Drehdurchführung (22) der Vakuumeinrichtung (20) vakuumübertragend verbunden ist.

3. Tiefziehanordnung nach Anspruch 1 oder 2,
**dadurch gekennzeichnet, dass** die Formkavitäten (15) sequentiell mit einem Formvakuum und mit einem Haltevakuum beaufschlagbar sind, wobei der Vakuumanschluss (17) ein Haltevakuumanschluss ist, wobei die Vakuumquelle (18) eine Haltevakuumquelle ist, und wobei die Plattenelemente (14, 14') im Betrieb permanent mit dem Haltevakuum beaufschlagt sind.

4. Tiefziehanordnung nach Anspruch 3,
**dadurch gekennzeichnet, dass** das Schaltventil (19) als Umschaltventil zur wechselseitigen Beaufschlagung der Formkavitäten (15) mit dem Formvakuum und mit dem Haltevakuum ausgeführt ist.

5. Tiefziehanordnung nach Anspruch 3 oder 4,
**dadurch gekennzeichnet, dass** die Tiefziehanordnung eine Formvakuumeinrichtung (25) aufweist, welche eine Formvakuumquelle (26) und eine mit der Formvakuumquelle (26) verbundene Verbindungsvorrichtung (27) umfasst, wobei die Verbindungsvorrichtung (27) Teil der zyklisch bewegten Tiefziehvorrichtung (5) ist, wobei die Plattenelemente (14) jeweils einen Formvakuumanschluss (28) aufweisen, und wobei die Verbindungsvorrichtung (27) mindestens einen Vakuumverbinder (29) aufweist, welcher zum zyklischen Verbinden mit dem Formvakuumanschluss (28) ausgelegt ist.

6. Tiefziehanordnung nach Anspruch 5,
**dadurch gekennzeichnet, dass** die Verbindungsvorrichtung (27) mehrere und insbesondere vier Vakuumverbinder (29) zum zyklischen Verbinden mit einer entsprechenden Anzahl von Plattenelementen (14) aufweist.

7. Tiefziehanordnung nach Anspruch 5 oder 6,
**dadurch gekennzeichnet, dass** die Plattenelemente (14) im Bereich der Formstation (8) in einer Bewegungsrichtung (11) bewegt werden, wobei die Verbindungsvorrichtung (27) mit ihrem mindestens einen Vakuumverbinder (29) für die Ausführung einer die Vakuumverbindung lösenden Lösebewegung (30) sowie einer die Vakuumverbindung herstellenden Schließbewegung (32) jeweils mit einer senkrecht zur Bewegungsrichtung (11) liegenden Richtungskomponente ausgelegt ist.

8. Tiefziehanordnung nach einem der Ansprüche 1 bis 7,
**dadurch gekennzeichnet, dass** die Plattenelemente (14) jeweils eine mit dem umlaufenden Transporteur (10) verbundene Trägerplatte (33) und eine lösbar mit der Trägerplatte (33) verbundene Matrizenplatte (34) aufweist, wobei die Formkavitäten (15) in der Matrizenplatte (34) ausgebildet sind, wobei die Trägerplatten (33) über die Verbindungleitungen (16) miteinander verbunden sind, und wobei die Trägerplatten (33) das Schaltventil (19) aufnehmen.

9. Verpackungsmaschine zur Herstellung von gefüllten Beuteln, umfassend eine Tiefziehanordnung nach einem der Ansprüche 1 bis 8, des Weiteren umfassend nachfolgende Bearbeitungsstationen, insbesondere eine Füllstation (6) und eine Siegelstation (8).

## Claims

1. Deep-drawing arrangement for deep-drawing a continuously supplied film strip (1), comprising a transporter (10) which revolves continuously around a fixed machine frame (3) and which has plate elements (14, 14') and mold cavities (15) which are located in the plate elements (14, 14'), further comprising a cyclically timed, deep-drawing apparatus (5) which runs from a start position to an end position with the transporter (10) and from there back to the start position, wherein the mold cavities (15) can be acted on with a pressure reduction,
**characterized in that** the plate elements (14, 14') are permanently connected to each other via connection lines (16), **in that** a plate element (14') is in the form of a connection element having at least one pressure reduction connection (17), **in that** the pressure reduction connection (17) is connected to a pressure reduction source (18), **in that** the plate elements (14, 14') are permanently acted on with the pressure reduction during operation via the connection lines (16) and the pressure reduction connection (17), and **in that** each plate element (14, 14') has at least one switching valve (19) for connecting the pressure reduction which is permanently applied in the plate element (14, 14') to the associated mold cavities (15) as required.

2. Deep-drawing arrangement according to claim 1,
**characterized in that** the deep-drawing arrangement has a pressure reduction device (20) which comprises the pressure reduction source (18), a carrier (21) which is guided along the machine frame (3) and which has at least one rotary transmission leadthrough (22), and a flexible pressure reduction line (23) between the pressure reduction source (18) and the carrier (21), wherein the pressure reduction connection (17) of the plate element (14') which is in the form of a connection element is connected via a connection line (24) to the rotary transmission leadthrough (22) of the pressure reduction device (20) so as to transmit a pressure reduction.

3. Deep-drawing arrangement according to claim 1 or 2,
**characterized in that** the mold cavities (15) can be acted on sequentially with a mold pressure reduction and with a retention pressure reduction, wherein the pressure reduction connection (17) is a retention pressure reduction connection, wherein the pressure reduction source (18) is a retention pressure reduction source, and wherein the plate elements (14, 14') are permanently acted on with the retention pressure reduction during operation.

4. Deep-drawing arrangement according to claim 3,
**characterized in that** the switching valve (19) is in the form of a changeover valve for mutually acting on the mold cavities (15) with the molding pressure reduction and with the retention pressure reduction.

5. Deep-drawing arrangement according to claim 3 or 4,
**characterized in that** the deep-drawing arrangement has a molding pressure reduction device (25) which comprises a molding pressure reduction source (26) and a connection apparatus (27) which is connected to the molding pressure reduction source (26), wherein the connection apparatus (27) is part of the cyclically moving deep-drawing apparatus (5), wherein the plate elements (14) each have a molding pressure reduction connection (28), and wherein the connection apparatus (27) has at least one pressure reduction connector (29) which is configured for cyclical connection to the molding pressure reduction connection (28).

6. Deep-drawing arrangement according to claim 5,
**characterized in that** the connection apparatus (27) has a plurality of, and in particular four, pressure reduction connectors (29) for cyclical connection to a corresponding number of plate elements (14).

7. Deep-drawing arrangement according to claim 5 or 6,
**characterized in that** the plate elements (14) are moved in the region of the molding station (8) in a movement direction (11), wherein the connection apparatus (27) having the at least one pressure reduction connector (29) thereof is configured to carry out a release movement (30) which releases the pressure reduction connection and a closure movement (32) which produces the pressure reduction connection in each case with a direction component perpendicular to the movement direction (11).

8. Deep-drawing arrangement according to one of claims 1 to 7,
**characterized in that** the plate elements (14) each have a carrier plate (33) which is connected to the revolving transporter (10) and a die plate (34) which is releasably connected to the carrier plate (33), wherein the mold cavities (15) are formed in the die plate (34), wherein the carrier plates (33) are connected to each other via the connection lines (16) and wherein the carrier plates (33) receive the switching valve (19).

9. Packaging machine for producing filled bags, comprising a deep-drawing arrangement according to one of claims 1 to 8, further comprising subsequent processing stations, in particular a filling station (6) and a sealing station (8).

## Revendications

1. Dispositif d'emboutissage pour emboutir une bande de film (1) amenée en continu, comprenant un convoyeur (10) tournant en continu autour d'un bâti de machine fixe (3), avec des éléments en plaque (14, 14') et avec des cavités de formage (15) situées dans les éléments en plaque (14, 14'), comprenant en outre un dispositif d'emboutissage (5) cadencé de manière cyclique, se déplaçant avec le convoyeur (10) d'une position de départ à une position finale et revenant de là à la position de départ, les cavités de formage (15) étant aptes à être mises sous vide,
**caractérisé en ce que** les éléments en plaque (14, 14') sont reliés entre eux de manière permanente par des conduites de liaison (16), **en ce qu'**un élément en plaque (14') est réalisé sous forme d'élément de raccordement avec au moins un raccord à vide (17), **en ce que** le raccord à vide (17) est relié à une source de vide (18), **en ce que** les éléments en plaque (14, 14') sont alimentés en permanence en vide pendant le fonctionnement par l'intermédiaire des conduites de liaison (16) et du raccord à vide (17), et **en ce que** chaque élément en plaque (14, 14') dispose d'au moins une soupape de commutation (19) pour connecter, en fonction des besoins, le vide présent en permanence dans l'élément en plaque (14, 14') aux cavités de formage (15) correspondantes.

2. Dispositif d'emboutissage selon la revendication 1,
**caractérisé en ce que** le dispositif d'emboutissage comprend un dispositif à vide (20) qui comprend la source de vide (18), un organe d'entraînement (21) guidé le long du bâti de machine (3) avec au moins un passage tournant (22), et une conduite flexible (23) à vide entre la source de vide (18) et l'organe d'entraînement (21), le raccord de vide (17) de l'élément en plaque (14') réalisé sous forme d'élément de raccordement étant relié au passage tournant (22) du dispositif à vide (20) par l'intermédiaire d'une conduite de raccordement (24), de manière à transmettre le vide.

3. Dispositif d'emboutissage selon la revendication 1 ou la revendication 2,
**caractérisé en ce que** les cavités de moulage (15) sont aptes à être alimentées séquentiellement avec un vide de moulage et avec un vide de maintien, le raccord à vide (17) étant un raccord à vide de maintien, la source de vide (18) étant une source de vide de maintien et les éléments en plaque (14, 14') étant alimentés en permanence avec le vide de maintien pendant le fonctionnement.

4. Dispositif d'emboutissage selon la revendication 3,
**caractérisé en ce que** la vanne de commutation (19) est conçue sous la forme d'une vanne de commutation pour appliquer alternativement le vide de formage et le vide de maintien aux cavités de formage (15).

5. Dispositif d'emboutissage selon la revendication 3 ou la revendication 4,
**caractérisé en ce que** le dispositif d'emboutissage comprend un dispositif (25) de vide de moulage qui comprend une source de vide de moulage (26) et un dispositif de raccordement (27) relié à la source de vide de moulage (26), le dispositif de raccordement (27) faisant partie du dispositif d'emboutissage à mouvement cyclique (5), les éléments en plaque (14) comportant chacun un raccord de vide de formage (28) et le dispositif de raccordement (27) comportant au moins un raccord de vide (29) qui est conçu pour être raccordé de manière cyclique au raccord de vide de formage (28).

6. Dispositif d'emboutissage selon la revendication 5,
**caractérisé en ce que** le dispositif de raccordement (27) comporte plusieurs, et en particulier quatre, raccords à vide (29) destinés à être raccordés de manière cyclique à un nombre correspondant d'éléments en plaque (14).

7. Dispositif d'emboutissage selon la revendication 5 ou la revendication 6,
**caractérisé en ce que** les éléments en plaque (14) sont déplacés dans une direction de déplacement (11) dans la zone de la station de formage (8), le dispositif de liaison (27) étant conçu avec son au moins un raccord à vide (29) pour l'exécution d'un mouvement de séparation (30) rompant la liaison sous vide ainsi que d'un mouvement de fermeture (32) établissant la liaison sous vide, avec une composante directionnelle perpendiculaire à la direction de déplacement (11).

8. Dispositif d'emboutissage selon l'une des revendications 1 à 7,
**caractérisé en ce que** les éléments en plaque (14) comportent chacun une plaque support (33) reliée au convoyeur tournant (10) et une plaque matrice (34) reliée de manière amovible à la plaque support (33), les cavités de formage (15) étant formées dans la plaque matrice (34), les plaques de support (33) étant reliées entre elles par les conduites de liaison (16) et les plaques de support (33) recevant la vanne de commutation (19).

9. Machine d'emballage pour la fabrication de sachets remplis, comprenant un dispositif d'emboutissage selon l'une des revendications 1 à 8, comprenant en outre des stations de traitement ultérieures, en particulier une station de remplissage (6) et une station de scellage (8).
